# EUROPÄISCHE PATENTANMELDUNG

(11) **EP 3 173 663 A1**
(43) Veröffentlichungstag der Anmeldung: **31.05.2017**
(21) Anmeldenummer: 15197001.9
(22) Anmeldetag: 30.11.2015
(51) Int. Cl.: F16H 3/66

(54) **GETRIEBE FÜR EIN KRAFTFAHRZEUG, SOWIE ANTRIEBSSTRANG FÜR EIN KRAFTFAHRZEUG MIT EINEM SOLCHEN GETRIEBE**

(71) Anmelder: ZF Friedrichshafen AG, 88046 Friedrichshafen (DE)
(72) Erfinder: Beck, Stefan, 88097 Eriskirch (DE); Brehmer, Martin, 88069 Tettnang (DE); Horn, Matthias, 88069 Tettnang (DE); Kaltenbach, Johannes, 88048 Friedrichshafen (DE); King, Julian, 6830 Rankweil (AT); Moraw, Jens, 88046 Friedrichshafen (DE); Münch, Eckehard, 32257 Bünde (DE); Niederbrucker, Gerhard, 88046 Friedrichshafen (DE); Pawlakowitsch, Juri, 88263 Horgenzell (DE); Scharr, Stephan, 88045 Friedrichshafen (DE); Warth, Viktor, 88048 Friedrichshafen (DE); Wechs, Michael, 88138 Weißensberg (DE); Ziemer, Peter, 88069 Tettnang (DE); Griesmeier, Uwe, 88677 Markdorf (DE); Kuberczyk, Raffael, 88212 Ravensburg (DE)

(57) **Zusammenfassung**

Getriebe (G) für ein Kraftfahrzeug, wobei das Getriebe (G) eine Antriebswelle (GW1), eine Abtriebswelle (GW2), drei Planetenradsätze (P1, P2, P3) sowie fünf Schaltelemente (03, 04, 05, 15, 16) aufweist, wobei durch selektives paarweises Schließen der fünf Schaltelemente (03, 04, 05, 15, 16) sechs Vorwärtsgänge (1 bis 6) und ein Rückwärtsgang (R1) zwischen der Antriebswelle (GW1) und der Abtriebswelle (GW2) ausbildbar sind, sowie Antriebsstrang für ein Kraftfahrzeug mit einem solchen Getriebe (G).

## Beschreibung

Die Erfindung betrifft ein Getriebe für ein Kraftfahrzeug, und einen Antriebsstrang für ein Kraftfahrzeug mit einem solchen Getriebe. Ein Getriebe bezeichnet hier insbesondere ein mehrgängiges Getriebe, bei dem eine Vielzahl von Gängen, also feste Übersetzungsverhältnisse zwischen zwei Wellen des Getriebes, durch Schaltelemente vorzugsweise automatisch schaltbar sind. Bei den Schaltelementen handelt es sich hier beispielsweise um Kupplungen oder Bremsen. Derartige Getriebe finden vor allem in Kraftfahrzeugen Anwendung, um die Drehzahl- und Drehmomentabgabecharakteristik der Antriebseinheit den Fahrwiderständen des Fahrzeugs in geeigneter Weise anzupassen.

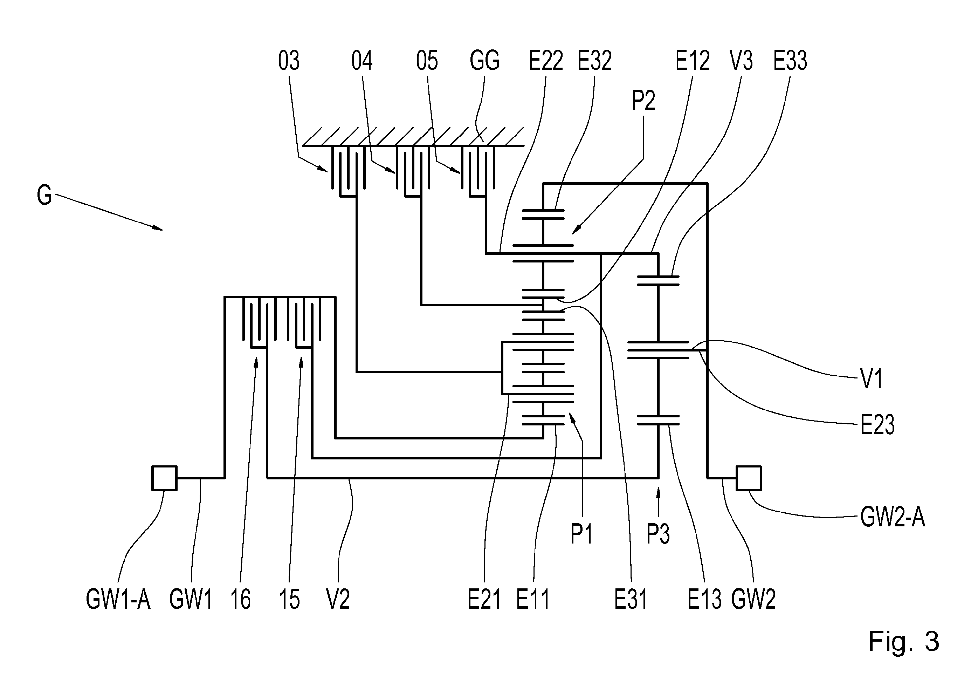

Aus der Offenlegungsschrift DE 103 02 023 A1 ist ein Mehrstufengetriebe bekannt, welches eine Antriebswelle, eine Abtriebswelle, drei Ein-Steg-Planetenradsätze, sechs drehbare Wellen sowie fünf Schaltelemente aufweist. Das Mehrstufengetriebe ist zur Bildung von sechs Vorwärtsgängen und einem Rückwärtsgang eingerichtet. Bei dem in Fig. 3 der Offenlegungsschrift dargestellten Ausführungsbeispiel sind die als P2 und P3 bezeichneten Planetenradsätze über eine zweifache Steg-Hohlrad-Koppelung miteinander verbunden. Die Abtriebswelle ist mit einer dieser Koppelungen verbunden ist, während die andere dieser Koppelungen drehfest festsetzbar und mit der Antriebswelle verbindbar ist. Ein Sonnenrad des als P3 bezeichneten Planetenradsatz ist mit der Antriebswelle verbindbar. Ein Sonnenrad des als P2 bezeichneten Planetenradsatzes ist drehfest festsetzbar, und mit einem Steg des als P1 bezeichneten Planetenradsatzes ständig verbunden. Der als P1 bezeichnete Planetenradsatz wirkt dabei als Reduzier-Radsatz, welcher durch Schließen des als 05 bezeichneten Schaltelements aktivierbar ist.

Aus der Offenlegungsschrift DE 101 62 885 A1 ist ein ähnliches Mehrstufengetriebe bekannt. Darin ist der als P1 bezeichnete Planetenradsatz als ein Plus-Radsatz ausgebildet, dessen Steg drehfest festgesetzt ist. Zwischen dem Sonnenrad des als P2 bezeichneten Planetenradsatzes und dem Hohlrad des als P1 bezeichneten Planetenradsatzes ist eine Kupplung angeordnet.

Aus der Offenlegungsschrift DE 10 2012 207 017 A1 ist ein zweistufiges Mehrstufengetriebe mit einem ähnlichen Aufbau angegeben. Die beiden zweifach miteinander gekoppelten Planetenradsätze weisen eine Steg-Steg-Koppelung und eine Sonnenrad-Hohlrad-Koppelung auf, und sind radial ineinander geschachtelt.

Es ist Aufgabe der Erfindung, alternative Ausführungsformen zu den eingangs genannten Mehrstufengetrieben anzugeben, welche sich besonders durch eine kompakte Bauform auszeichnen.

Die Aufgabe wird gelöst durch die Merkmale des Patentanspruchs 1. Vorteilhafte Ausgestaltungen ergeben sich aus den Unteransprüchen, der Beschreibung sowie aus den Figuren.

Das erfindungsgemäße Getriebe weist eine Antriebswelle, eine Abtriebswelle, drei Planetenradsätze, sowie ein erstes, ein zweites, ein drittes, ein viertes und ein fünftes Schaltelement auf. Ein Planetenradsatz umfasst ein Sonnenrad, einen Steg und ein Hohlrad. An dem Steg drehbar gelagert sind Planetenräder, welche mit der Verzahnung des Sonnenrades und/oder mit der Verzahnung des Hohlrads kämmen. Ein Minus-Radsatz bezeichnet einen Planetenradsatz mit einem Steg, an dem die Planetenräder drehbar gelagert sind, mit einem Sonnenrad und mit einem Hohlrad, wobei die Verzahnung zumindest eines der Planetenräder sowohl mit der Verzahnung des Sonnenrades, als auch mit der Verzahnung des Hohlrades kämmt, wodurch das Hohlrad und das Sonnenrad in entgegengesetzte Drehrichtungen rotieren, wenn das Sonnenrad bei feststehendem Steg rotiert. Ein Plus-Radsatz unterscheidet sich zu dem gerade beschriebenen Minus-Planetenradsatz dahingehend, dass der Plus-Radsatz innere und äußere Planetenräder aufweist, welche drehbar an dem Steg gelagert sind. Die Verzahnung der inneren Planetenräder kämmt dabei einerseits mit der Verzahnung des Sonnenrads und andererseits mit der Verzahnung der äußeren Planetenräder. Die Verzahnung der äußeren Planetenräder kämmt darüber hinaus mit der Verzahnung des Hohlrades. Dies hat zur Folge, dass bei feststehendem Steg das Hohlrad und das Sonnenrad in die gleiche Drehrichtung rotieren.

Die Antriebswelle ist mit einem als Sonnenrad des als Plus-Radsatz ausgebildeten ersten Planetenradsatz ständig verbunden. Die Abtriebswelle ist mit einem Hohlrad des als Minus-Radsatz ausgebildeten zweiten Planetenradsatzes ständig verbunden. Ein Hohlrad des ersten Planetenradsatzes ist mit einem Sonnenrad des zweiten Planetenradsatzes ständig verbunden.

Durch Schließen des ersten Schaltelements ist ein Steg des ersten Planetenradsatzes drehfest festsetzbar. Durch Schließen des zweiten Schaltelements ist das Hohlrad des ersten Planetenradsatzes drehfest festsetzbar. Durch Schließen des dritten Schaltelements ist ein Steg des zweiten Planetenradsatzes drehfest festsetzbar. Durch Schließen des vierten Schaltelements ist eine drehmomentführende Verbindung zwischen der Antriebswelle und dem Steg des zweiten Planetenradsatzes herstellbar. Das erste bis dritte Schaltelement wirken somit jeweils als Bremse, während das vierte Schaltelement als Kupplung wirkt.

Der dritte Planetenradsatz weist ein erstes Element, ein zweites Element und ein drittes Element auf. Das erste Element wird stets durch ein Sonnenrad des dritten Planetenradsatzes gebildet. Ist der dritte Planetenradsatz als ein Minus-Radsatz ausgebildet, so wird das zweite Element durch dessen Steg gebildet, und das dritte Element durch dessen Hohlrad. Ist der dritte Planetenradsatz als ein Plus-Radsatz ausgebildet, so wird das zweite Element durch dessen Hohlrad gebildet, und das dritte Element durch dessen Steg.

Das Getriebe weist mehrere Kopplungen auf, darunter eine erste Koppelung, eine zweite Koppelung und eine dritte Koppelung. Die erste Koppelung besteht zwischen der Abtriebswelle und dem zweiten Element dritten Planetenradsatzes. Die zweite Koppelung besteht zwischen der Antriebswelle und dem ersten Element des dritten Planetenradsatzes. Die dritte Koppelung besteht zwischen dem Steg des zweiten Planetenradsatzes und dem dritten Element des dritten Planetenradsatzes. Zwei der drei Koppelungen sind jeweils als ständige Verbindungen ausgebildet, während die verbleibende der drei Koppelungen als eine mittels des fünften Schaltelements schaltbare Verbindung ausgebildet ist. Das fünfte Schaltelement befindet sich daher in einer ersten Ausgestaltung in der Wirkverbindung zwischen Antriebswelle und dem ersten Element des dritten Planetenradsatzes, also in der zweiten Koppelung. In dieser ersten Ausgestaltung ist das zweite Element des dritten Planetenradsatzes mit der Abtriebswelle ständig verbunden, und der Steg des zweiten Planetenradsatzes ist mit dem dritten Element des dritten Planetenradsatzes ständig verbunden. In einer zweiten Ausgestaltung befindet sich das fünfte Schaltelement in der Wirkverbindung zwischen Abtriebswelle und dem zweiten Element des dritten Planetenradsatzes, also in der ersten Koppelung. In dieser zweiten Ausgestaltung ist die Antriebswelle mit dem ersten Element des dritten Planetenradsatzes ständig verbunden, und der Steg des zweiten Planetenradsatzes ist mit dem dritten Element des dritten Planetenradsatzes ständig verbunden. In einer dritten Ausgestaltung befindet sich das fünfte Schaltelement in der Wirkverbindung zwischen dem Steg des zweiten Planetenradsatzes und dem dritten Element des dritten Planetenradsatzes, also in der dritten Koppelung. In dieser dritten Ausgestaltung ist die Abtriebswelle mit dem zweiten Element des dritten Planetenradsatzes ständig verbunden, und die Antriebswelle ist mit dem ersten Element des dritten Planetenradsatzes ständig verbunden.

Ein Getriebe mit dieser erfindungsgemäßen Zuordnung der einzelnen Getriebeelemente weist eine kompakte Bauweise sowie geringe Bauteilbelastungen auf.

Durch selektives paarweises Schließen der fünf Schaltelemente sind sechs Vorwärtsgänge und ein Rückwärtsgang zwischen der Antriebswelle und der Abtriebswelle darstellbar. Der erste Vorwärtsgang wird durch Schließen des fünften Schaltelements und des dritten Schaltelements gebildet. Der zweite Vorwärtsgang wird durch Schließen des fünften Schaltelements und des zweiten Schaltelements gebildet. Der dritte Vorwärtsgang wird durch Schließen des fünften Schaltelements und des ersten Schaltelements gebildet. Der vierte Vorwärtsgang wird durch Schließen des fünften Schaltelements und des vierten Schaltelements gebildet. Der fünfte Vorwärtsgang wird durch Schließen des ersten Schaltelements und des vierten Schaltelements gebildet. Der sechste Vorwärtsgang wird durch Schließen des zweiten Schaltelements und des vierten Schaltelements gebildet. Der Rückwärtsgang wird durch Schließen des ersten Schaltelements und des dritten Schaltelements gebildet. Dadurch wird, bei geeigneter Wahl der Standgetriebeübersetzungen der Planetenradsätze, eine für die Anwendung im Kraftfahrzeug gut geeignete Übersetzungsreihe erzielt. Zudem weisen zwei benachbarte Vorwärtsgänge stets ein Schaltelement auf, das in beiden diesen Gängen geschlossen ist. Dies vereinfacht den Schaltvorgang und verkürzt die Schaltdauer zwischen benachbarten Vorwärtsgängen. Da das fünfte Schaltelement im ersten bis vierten Vorwärtsgang geschlossen ist, ermöglicht das Schaltschema einen derart vereinfachten Schaltvorgang zwischen jedem der ersten vier Vorwärtsgänge. Dies gilt auch für einen Schaltvorgang zwischen den Vorwärtsgängen vier und sechs, da in diesen Gängen das vierte Schaltelement geschlossen ist. Ebenso ist ein solcher direkter Schaltvorgang zwischen den Vorwärtsgängen drei und fünf möglich, da in diesen Gängen das erste Schaltelement geschlossen ist. Das Schaltschema erlaubt somit für die Anwendung im Kraftfahrzeug vorteilhafte Skip-Schaltungen.

Vorzugsweise ist der erste Planetenradsatz radial innerhalb des zweiten Planetenradsatzes angeordnet. Eine solche Anordnung ist aufgrund der Sonnenrad-Hohlrad-Koppelung zwischen dem ersten und dem zweiten Planetenradsatz unter Beibehaltung der kompakten Ausgestaltung möglich. Das Sonnenrad kann dabei unmittelbar am Außendurchmesser des Hohlrades ausgebildet sein.

Gemäß einer ersten Ausführungsform sind Schnittstellen der Antriebswelle und der Abtriebswelle koaxial zueinander und an gegenüberliegenden axialen Enden des Getriebes angeordnet. Von den drei Planetenradsätzen weist dabei der dritte Planetenradsatz den größten axialen Abstand zur Schnittstelle der Antriebswelle auf. Eine solche Anordnung eignet sich besonders zur Anwendung des Getriebes in einem Kraftfahrzeug mit parallel zur Fahrtrichtung des Kraftfahrzeugs ausgerichtetem Antriebsstrang. Die Schnittstellen können beispielsweise als Steckverzahnung oder als Flansch ausgebildet sein.

Gemäß einer zweiten Ausführungsform sind Schnittstellen der Antriebswelle und der Abtriebswelle koaxial zueinander angeordnet. Von den drei Planetenradsätzen weist dabei der dritte Planetenradsatz den kürzesten axialen Abstand zur Schnittstelle der Antriebswelle auf. Die Schnittstelle der Abtriebswelle weist eine Verzahnung auf, welche mit einer Verzahnung einer zur Hauptachse des Getriebes achsparallel angeordneten Welle kämmt. Auf dieser Welle kann beispielsweise das Achsdifferential eines Antriebsstrangs angeordnet sein, welches vorzugsweise Bestandteil des Getriebes ist. Eine solche Anordnung eignet sich besonders zur Anwendung des Getriebes in einem Kraftfahrzeug mit quer zur Fahrtrichtung des Kraftfahrzeugs ausgerichtetem Antriebsstrang.

Prinzipiell kann jedes der fünf Schaltelemente als formschlüssiges Schaltelement, also beispielsweise als Klauenkupplung, oder als kraftschlüssiges Schaltelement ausgebildet sein, also beispielsweise als Lamellenkupplung. Vorzugsweise ist das dritte Schaltelement als formschlüssiges Schaltelement ausgebildet. Formschlüssige Schaltelemente stellen im geschlossenen Zustand die Verbindung durch Formschluss her, und zeichnen sich im geöffneten Zustand durch geringere Schleppverluste als kraftschlüssige Schaltelemente aus. Durch die im geöffneten Zustand geringen Schleppverluste wird der Wirkungsgrad des Getriebes verbessert, besonders da das dritte Schaltelement lediglich im ersten der sechs Vorwärtsgänge geschlossen ist. Bei Verwendung des Getriebes im Kraftfahrzeug-Antriebsstrang ist das dritte Schaltelement daher überwiegend geöffnet. Der mechanische Wirkungsgrad des Kraftfahrzeug-Antriebsstranges kann somit verbessert werden. Gemäß einer alternativen Ausführung kann das dritte Schaltelement als ein kraftschlüssiges Reibschaltelement ausgebildet sein, dessen Lamellen ausschließlich belaglose Reibflächen aufweisen. In anderen Worten weist der scheibenförmige Grundkörper jeder Lamelle des Reibschaltelements keinen auf die Lamelle aufgebrachten Reibbelag auf. Die Reibflächen einzelner oder sämtlicher Lamellen eines solchen Reibschaltelements können jedoch wärmebehandelt sein, beispielsweise nitriert. Derartige Reibschaltelemente sind für hohe Flächenpressungen ausgelegt, und können daher mit kleiner Reibfläche und wenigen Lamellen ausgebildet werden. Dadurch können die Schleppverluste eines solchen Schaltelements im geöffneten Zustand reduziert werden.

Ergänzend oder alternativ dazu kann das fünfte Schaltelement als formschlüssiges Schaltelement ausgebildet sein, wodurch ebenso eine Verbesserung des mechanischen Wirkungsgrades erzielt werden kann. Gemäß einer alternativen Ausführung kann das fünfte Schaltelement als kraftschlüssiges Reibschaltelement ausgebildet sein, als ein kraftschlüssiges Reibschaltelement ausgebildet sein, dessen Lamellen ausschließlich belaglose Reibflächen aufweisen.

Wird durch das dritte und/oder das fünfte Schaltelement wie vorangehend beschrieben je eine formschlüssige Verbindung oder eine kraftschlüssige Verbindung mit hoher Flächenpressung ausgebildet, so sind das erste, zweite und vierte Schaltelement vorzugweise als kraftschlüssige Schaltelemente mit variabler Drehmomentübertragungsfähigkeit ausgebildet. Dies verbessert den Komfort bei Lastschaltungen des Getriebes.

Gemäß einer möglichen Ausführungsform umgreift die Verbindung zwischen dem Hohlrad des zweiten Planetenradsatzes und der Abtriebswelle den dritten Planetenradsatz radial außen. Auf diese Weise kann der zweite Planetenradsatz axial eng an den dritten Planetenradsatz angeordnet werden. Die ständige oder schaltbare Verbindung zwischen dem dritten Element des dritten Planetenradsatzes und dem dritten Schaltelement führt dabei axial durch den zweiten Planetenradsatz hindurch. Dies ist auf einfache Weise möglich, da das dritte Schaltelement dazu eingerichtet ist den Steg des zweiten Planetenradsatzes drehfest festzusetzen.

Gemäß einer alternativen Ausführungsform führt die Verbindung zwischen dem Hohlrad des zweiten Planetenradsatzes und der Abtriebswelle axial durch den dritten Planetenradsatz hindurch. Der dritte Planetenradsatz ist dabei als ein Minus-Radsatz ausgebildet, und das fünfte Schaltelement ist entweder in der zweiten oder in der dritten Koppelung angeordnet. Dadurch ist besonders das der Abtriebswellen-Schnittstelle zugeordnete axiale Ende des Getriebes besonders kompakt ausführbar. Bei einer solchen Ausführungsform kann zudem das dritte Schaltelement radial außerhalb des dritten Planetenradsatzes angeordnet werden. In anderen Worten befinden sich Elemente des dritten Schaltelements und des dritten Planetenradsatzes in einer gemeinsamen Ebene, welche normal zur Drehachse des dritten Planetenradsatzes ist. Dadurch kann die axiale Baulänge des Getriebes verkürzt werden.

Vorzugsweise weisen das erste und zweite Schaltelement einen größeren Wirkdurchmesser als das vierte und fünfte Schaltelement auf. Dies ist besonders bei Ausbildung des ersten und zweiten Schaltelements als je ein kraftschlüssiges Schaltelement vorteilhaft, beispielsweise als Lamellenbremsen. Das erste und zweite Schaltelement können somit gehäusenah angeordnet werden, wobei der Außenlamellenträger jeder Lamellenbremse mit dem Gehäuse drehfest verbunden ist. Ein solcher Aufbau ist konstruktiv auf einfache Weise umsetzbar, und führt zu einer guten Bauraumausnutzung. Die beiden als Kupplung wirkenden Schaltelemente vier und fünf können zumindest abschnittsweise radial innerhalb dieser beiden Bremsen angeordnet sein. Durch eine solche radiale Schachtelung kann die axiale Baulänge des Getriebes reduziert werden.

Vorzugsweise sind das vierte und fünfte Schaltelement entweder axial neben den Planetenradsätzen angeordnet oder axial zwischen dem zweiten und dritten Planetenradsatz angeordnet. Aufgrund der einfachen Zugänglichkeit zur Betätigung und der möglichen Anordnung radial innerhalb des ersten und zweiten Schaltelements kann die Anordnung der Schaltelemente vier und fünf axial neben den Planetenradsätzen bevorzugt sein. Die Anordnung der Schaltelemente vier und fünf axial zwischen dem zweiten und dritten Planetenradsatz ermöglicht einen radial besonders kompakten Aufbau, da das Sonnenrad des ersten Planetenradsatzes radial nahe zur Drehachse des ersten Planetenradsatzes angeordnet werden kann. Dies ist besonders bei einer Ausführung mit einer radialen Schachtelung des ersten und zweiten Planetenradsatzes von Bedeutung.

Vorzugsweise ist das vierte Schaltelement radial außerhalb des fünften Schaltelements angeordnet. In anderen Worten befinden sich Elemente des vierten Schaltelements und Elemente des fünften Schaltelements in einer gleichen Ebene, welche normal zur Drehachse der Schaltelemente vier und fünf ist. Dies ist besonders bei einer Ausführung vorteilhaft, bei der das fünfte Schaltelement als ein formschlüssiges Schaltelement ausgeführt ist. Denn formschlüssige Schaltelemente können auf einem sehr kleinen Durchmesser angeordnet werden. Durch eine solche Anordnung ist der zur Verfügung stehende Bauraum besonders effizient ausnutzbar. Die Außenabmessungen des Getriebes können somit verringert werden.

Gemäß einer möglichen Ausgestaltung kann das vierte Schaltelement axial zwischen dem zweiten und dritten Planetenradsatz angeordnet sein, wobei das fünfte Schaltelement axial neben den Planetenradsätzen angeordnet ist. Diese Anordnung ermöglicht einen radial besonders kompakten Aufbau. Dies ist besonders bei einer Ausführung mit einer radialen Schachtelung des ersten und zweiten Planetenradsatzes von Bedeutung.

Vorzugsweise umfasst das Getriebe eine elektrische Maschine mit einem drehfesten Stator und einem drehbaren Rotor, wobei der Rotor in ständiger Wirkverbindung zur Antriebswelle steht. Die ständige Verbindung kann dabei als direkte Verbindung oder über ein festes Übersetzungsverhältnis ausgebildet sein, beispielsweise über einen zusätzlichen Planetenradsatz, wobei ein Element dieses Planetenradsatzes drehfest festgesetzt ist. Beispielsweise könnte dessen Sonnenrad ständig drehfest festgesetzt, dessen Steg mit der Antriebswelle verbunden und dessen Hohlrad mit dem Rotor der elektrischen Maschine verbunden sein, sodass die Drehzahl des Rotors im Vergleich zur Antriebswellendrehzahl vergrößert wird. Durch die elektrische Maschine kann die Funktionalität des Getriebes erweitert werden, wodurch sich das Getriebe für den Antriebsstrang eines Hybridfahrzeugs eignet. Die Anbindung des Rotors an die Antriebswelle erlaubt die Nutzung sämtlicher Vorwärtsgänge bei Antrieb des Hybridfahrzeugs mittels der elektrischen Maschine.

Das Getriebe kann eine Anschlusswelle aufweisen, welche als Schnittstelle zu einer getriebeexternen Antriebseinheit dient, beispielsweise einer Verbrennungskraftmaschine. Die Anschlusswelle ist über eine Trennkupplung mit der Antriebswelle verbindbar. Alternativ dazu kann die Trennkupplung samt der Anschlusswelle auch außerhalb des Getriebes angeordnet sein. Die Trennkupplung ist, als Bestandteil des Getriebes vorzugsweise radial innerhalb der elektrischen Maschine angeordnet. Dadurch wird eine kompakte Ausbildung des Getriebes begünstigt. Durch Öffnen der Trennkupplung kann das Kraftfahrzeug mittels der elektrischen Maschine in sämtlichen Gängen des Getriebes angetrieben werden, ohne die getriebeexterne Antriebseinheit mitzuschleppen. Die Trennkupplung kann als formschlüssiges oder als kraftschlüssiges Schaltelement ausgebildet sein. Das Getriebe kann einen Torsionsschwingungsdämpfer aufweisen, welcher zur Dämpfung von Drehschwingungen eingerichtet ist, und vorzugsweise in der Wirkverbindung zwischen zwei Abschnitten der Anschlusswelle angeordnet ist. Der erste Abschnitt der Anschlusswelle ist der Schnittstelle zur getriebeexternen Antriebseinheit zugeordnet, und der zweite Abschnitt der Anschlusswelle ist der Trennkupplung zugeordnet. Derart können von der getriebeexternen Antriebseinheit erzeugte Drehschwingungen zur Antriebswelle hin gedämpft werden.

Vorzugweise sind das vierte und/oder das fünfte Schaltelement zumindest abschnittsweise radial innerhalb der elektrischen Maschine angeordnet. Dadurch kann der zylinderförmige Bauraum radial innerhalb der elektrischen Maschine ausgenutzt werden.

Gemäß einer bevorzugten Ausführungsform sind das vierte und/oder das fünfte Schaltelement als je eine Lamellenkupplung ausgebildet. Ein Außenlamellenträger der Lamellenkupplung, bzw. der Lamellenkupplungen ist dabei bevorzugt mit dem Rotor ständig drehfest verbunden. Besonders bevorzugt bildet ein Abschnitt des Rotors den Außenlamellenträger zumindest einer dieser beiden Kupplungen. Da sowohl das vierte und das fünfte Schaltelement eine Schnittstelle zur Antriebswelle aufweisen, und der Rotor mit der Antriebswelle in Antriebswirkverbindung steht, kann durch eine solche Konstruktion auf andere Verbindungselemente verzichtet werden.

Prinzipiell kann dem Getriebe in bekannter Weise ein Anfahrelement vorangeschaltet werden, beispielsweise ein hydrodynamischer Drehmomentwandler oder eine Reibkupplung. Ein solches Anfahrelement kann auch integraler Bestandteil des Getriebes sein. Das Anfahrelement ermöglicht bei Verwendung des Getriebes im Kraftfahrzeug-Antriebsstrang einen Anfahrvorgang, indem es einen Schlupfzustand zwischen Verbrennungsmotor und Abtriebswelle ermöglicht. Bevorzugt ist ein solches Anfahrelement jedoch innerhalb des Getriebes ausgebildet, indem das dritte Schaltelement als Reibschaltelement ausgebildet wird. Durch Schlupfbetrieb des dritten Schaltelements ist ein Anfahrvorgang im ersten Vorwärtsgang und im Rückwärtsgang möglich. Somit kann ein separates Anfahrelement entfallen. Ist das dritte Schaltelement als ein formschlüssiges Schaltelement ausgebildet oder erlaubt es kein genaue Regelung eines Schlupfzustandes, so kann ein Schlupfzustand beim Anfahren durch das fünfte Schaltelement für einen Anfahrvorgang in Vorwärtsrichtung und durch das erste Schaltelement für einen Anfahrvorgang in Rückwärtsrichtung erreicht werden, Das fünfte, bzw. erste Schaltelement sind dazu als geeignete kraftschlüssige Schaltelemente auszubilden.

Das Getriebe kann Bestandteil eines Antriebsstrangs eines Kraftfahrzeugs sein. Der Antriebsstrang weist neben dem Getriebe auch eine Verbrennungskraftmaschine auf, welche über einen Torsionsschwingungsdämpfer mit der Antriebswelle des Getriebes drehelastisch verbunden, bzw. verbindbar ist. Zwischen Antriebswelle und Verbrennungskraftmaschine kann sich die Trennkupplung befinden, welche Bestandteil des Getriebes sein kann. Die Abtriebswelle des Getriebes ist mit einem Achsgetriebe antriebswirkverbunden, welche mit Rädern des Kraftfahrzeugs wirkverbunden ist. Weist das Getriebe die elektrische Maschine auf, so ermöglicht der Antriebsstrang mehrere Antriebsmodi des Kraftfahrzeugs. In einem elektrischen Fahrbetrieb wird das Kraftfahrzeug von der elektrischen Maschine des Getriebes angetrieben. In einem verbrennungsmotorischen Betrieb wird das Kraftfahrzeug von der Verbrennungskraftmaschine angetrieben. In einem hybridischen Betrieb wird das Kraftfahrzeug sowohl von der Verbrennungskraftmaschine als auch von der elektrischen Maschine des Getriebes angetrieben.

Eine ständige Verbindung wird als Verbindung zwischen zwei Elementen bezeichnet, die stets besteht. Derart ständig verbundene Elemente drehen stets mit der gleichen Abhängigkeit zwischen deren Drehzahlen. In einer ständigen Verbindung zwischen zwei Elementen kann sich kein Schaltelement befinden. Eine ständige Verbindung ist daher von einer schaltbaren Verbindung zu unterscheiden. Eine ständig drehfeste Verbindung wird als Verbindung zwischen zwei Elementen bezeichnet, die stets besteht und deren verbundene Elemente somit stets die gleiche Drehzahl aufweisen.

Unter dem Begriff "Schließen eines Schaltelements" wird im Zusammenhang mit der Gangbildung ein Vorgang verstanden, bei dem das Schaltelement so angesteuert wird, dass es am Ende des Schließvorgangs ein hohes Maß an Drehmoment überträgt. Während formschlüssige Schaltelemente im "geschlossenen" Zustand keine Differenzdrehzahl zulassen, ist bei kraftschlüssigen Schaltelementen im "geschlossenen" Zustand die Ausbildung einer geringen Differenzdrehzahl zwischen den Schaltelementhälften gewollt oder ungewollt möglich.

Ausführungsbeispiele der Erfindung sind nachfolgend anhand der beigefügten Figuren detailliert beschrieben. Es zeigen:
Fig. 1 bis Fig. 13 erste bis dreizehnte Ausführungsbeispiele von erfindungsgemäßen Getrieben;
Fig. 14 ein Schaltschema;
Fig. 15 bis Fig. 17 Varianten des Getriebes mit elektrischer Maschine; und
Fig. 18 einen Antriebsstrang eines Kraftfahrzeugs.

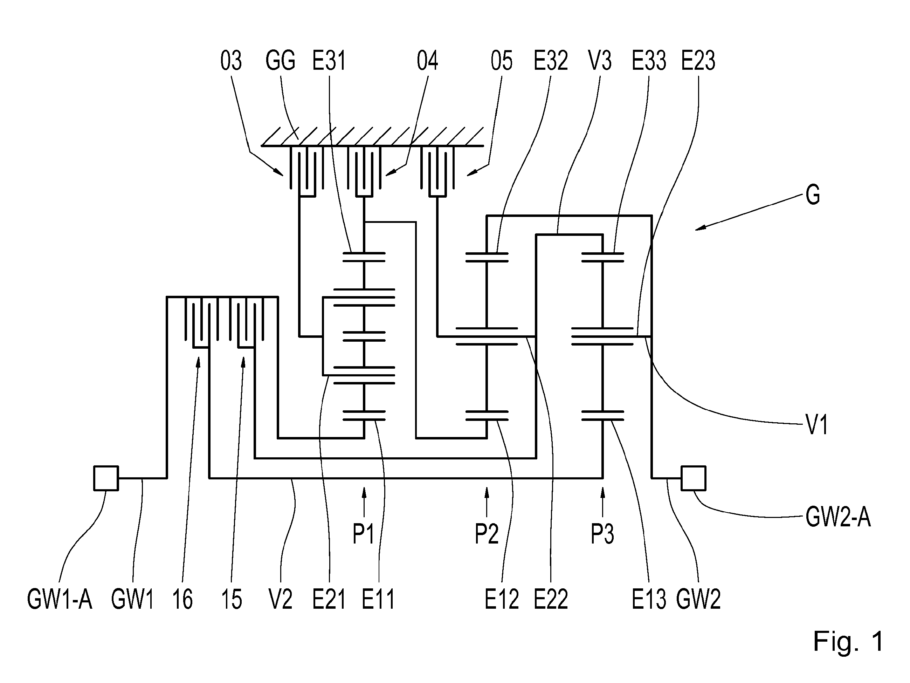

Fig. 1 zeigt ein Getriebe G gemäß einem ersten Ausführungsbeispiel der Erfindung. Das Getriebe G weist einen ersten Planetenradsatz P1, einen zweiten Planetenradsatz P2, einen dritten Planetenradsatz P3, eine Antriebswelle GW1, eine Abtriebswelle GW2 sowie ein erstes Schaltelement 03, ein zweites Schaltelement 04, ein drittes Schaltelement 05, ein viertes Schaltelement 15 und ein fünftes Schaltelement 16 auf. Der erste Planetenradsatz P1 ist als ein Plus-Radsatz ausgebildet. Der zweite und dritte Planetenradsatz P2, P3 sind je als ein Minus-Radsatz ausgebildet. Der dritte Planetenradsatz P3 könnte auch als Plus-Radsatz ausgebildet sein. Der dritte Planetenradsatz P3 weist ein erstes Element E13, ein zweites Element E23 und ein drittes Element E33 auf. Das erste Element E13 wird stets durch das Sonnenrad des dritten Planetenradsatzes P3 gebildet. Ist der dritte Planetenradsatz P3 als ein Minus-Radsatz ausgebildet, so wird dessen zweites Element E23 durch den Steg gebildet, und dessen drittes Element E33 durch das Hohlrad. Ist der dritte Planetenradsatz P3 als ein Plus-Radsatz ausgebildet, so wird dessen zweites Element E23 durch das Hohlrad gebildet, und dessen drittes Element E33 durch dessen Steg. Aus Gründen der Übersichtlichkeit sind die Varianten mit einem als Plus-Radsatz ausgeführten dritten Planetenradsatz P3 nicht in den Figuren dargestellt.

Die Antriebswelle GW1 ist mit einem Sonnenrad E11 des ersten Planetenradsatzes P1 ständig verbunden. Die Abtriebswelle GW2 ist mit einem Hohlrad E32 des zweiten Planetenradsatzes P2 und dem zweiten Element E23 des dritten Planetenradsatzes P3 ständig verbunden. Ein Hohlrad E31 des ersten Planetenradsatzes P1 ist mit einem Sonnenrad E12 des zweiten Planetenradsatzes P2 ständig verbunden. Ein Steg E22 des zweiten Planetenradsatzes P2 ist mit dem dritten Element E33 des dritten Planetenradsatzes P3 ständig verbunden.

Durch Schließen des ersten Schaltelementes 03 ist ein Steg E21 des ersten Planetenradsatzes P1 drehfest festsetzbar, indem der Steg E21 über das erste Schaltelement 03 mit einem drehfesten Bauelement GG des Getriebes G verbunden wird. Das drehfeste Bauelement GG kann beispielsweise durch das Getriebegehäuse des Getriebes G gebildet sein. Durch Schließen des zweiten Schaltelements 04 ist in gleicher Weise das Hohlrad E31 des ersten Planetenradsatzes P1 drehfest festsetzbar. Durch Schließen des dritten Schaltelementes 05 ist in gleicher Weise der Steg E22 des zweiten Planetenradsatzes P2 drehfest festsetzbar. Die Schaltelemente 03, 04, 05 wirken somit als Bremsen. Durch Schließen des vierten Schaltelementes 15 ist die Antriebswelle GW1 mit dem Steg E22 des zweiten Planetenradsatzes P2 verbindbar. Durch Schließen des fünften Schaltelements 16 ist die Antriebswelle GW1 mit dem ersten Element E13 des dritten Planetenradsatzes P3 verbindbar. Die Schaltelemente 15, 16 wirken somit als Kupplungen.

Die Antriebswelle GW1 und die Abtriebswelle GW2 sind koaxial zueinander angeordnet. Eine Schnittstelle GW1-A der Antriebswelle GW1 ist dabei an einem axialen Ende des Getriebes G angeordnet, welches einer Schnittstelle GW2-A der Abtriebswelle GW2 gegenüberliegt. Die Schnittstellen GW1-A, GW2-A sind somit an gegenüberliegenden axialen Enden des Getriebes G angeordnet. Ausgehend von der Schnittstelle GW1-A der Antriebswelle GW1 sind die Planetenradsätze in folgender axialer Reihenfolge angeordnet: erster Planetenradsatz P1, zweiter Planetenradsatz P2, dritter Planetenradsatz P3. Von den drei Planetenradsätzen P1, P2, P3 weist somit der dritte Planetenradsatz P3 den größten axialen Abstand zur Schnittstelle GW1-A der Antriebswelle GW1 auf.

Die Schaltelemente 03, 04, 05, 15, 16 sind schematisch als kraftschlüssige Schaltelemente dargestellt. Dies ist lediglich beispielhaft anzusehen. Jedes dieser Schaltelemente könnte auch als ein formschlüssiges Schaltelement ausgebildet sein. Das dritte Schaltelement 05 und das fünfte Schaltelement 16 eignen sich besonders zur Ausbildung als formschlüssige Schaltelemente. Ist eines der Schaltelemente als formschlüssiges Schaltelement ausgebildet, so ist es bevorzugt an einem radial möglichst kleinen Wirkdurchmesser angeordnet, um den Bauaufwand der formschlüssigen Verbindung zu reduzieren.

Das Getriebe G weist zahlreiche Koppelungen auf, darunter eine erste Koppelung V1, eine zweite Koppelung V2 und eine dritte Koppelung V3. Die erste Koppelung V1 besteht zwischen dem zweiten Element E23 des dritten Planetenradsatzes P3 und der Abtriebswelle GW2. Die zweite Koppelung besteht zwischen der Antriebswelle GW1 und dem ersten Element E13 des dritten Planetenradsatzes P3. Die dritte Koppelung besteht zwischen dem Steg E22 des zweiten Planetenradsatzes P2 und dem dritten Element E33 des dritten Planetenradsatzes P3. Im Getriebe G gemäß dem ersten Ausführungsbeispiel sind die erste Koppelung V1 und die dritte Koppelung V3 als ständige Verbindungen ausgebildet. Die zweite Koppelung V2 ist als eine schaltbare Verbindung ausgebildet, da sich in der Wirkverbindung zwischen dem ersten Element E13 des dritten Planetenradsatzes P3 und der Antriebswelle GW1 das fünfte Schaltelement 16 befindet.

Die als Bremse wirkenden Schaltelemente 03, 04, 05 sind auf einem größeren Durchmesser angeordnet als die die als Kupplung wirkenden Schaltelemente 15, 16, und sind radial außerhalb der Planetenradsätze P1, P2, P3 angeordnet. Die als Kupplung wirkenden Schaltelemente 15, 16 sind axial zwischen der Schnittstelle GW1-A der Antriebswelle GW1 und dem ersten Planetenradsatz P1 angeordnet.

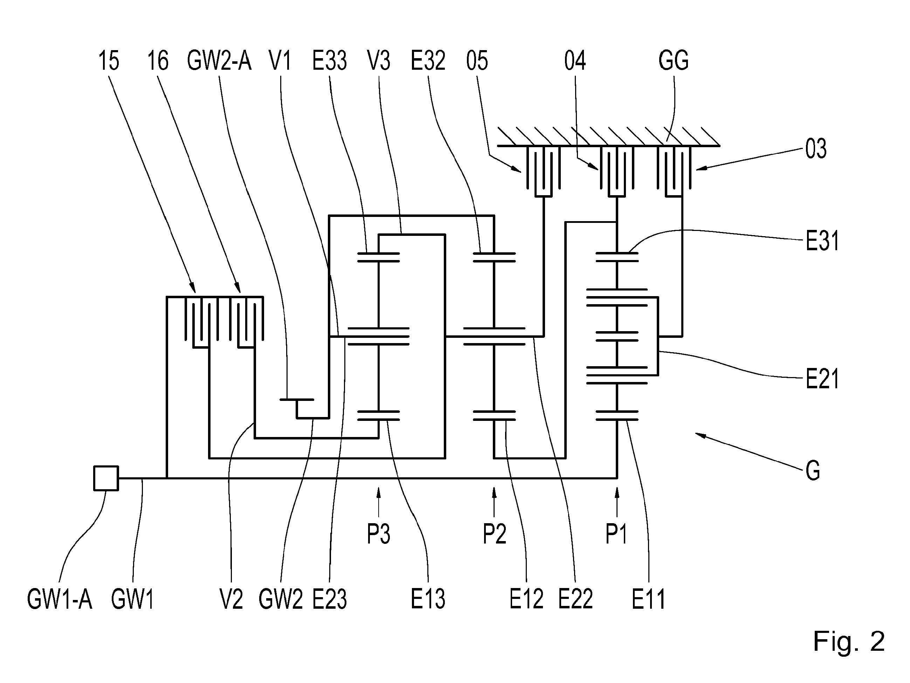

Fig. 2 zeigt schematisch ein Getriebe G gemäß einem zweiten Ausführungsbeispiel der Erfindung, welches im Wesentlichen dem in Fig. 1 dargestellten Ausführungsbeispiel entspricht. Lediglich die räumliche Anordnung der Planetenradsätze P1, P2, P3 wurde im Verhältnis zu den Schnittstellen GW1-A, GW2-A der Antriebswelle GW1 beziehungsweise der Abtriebswelle GW2 verändert. Die Schnittstelle GW2-A der Abtriebswelle GW2 weist nun eine Verzahnung auf, welche mit einer Verzahnung einer nicht dargestellten, zur Abtriebswelle GW2 achsparallelen Welle, kämmt. Auf dieser achsparallelen Welle kann beispielsweise ein Achsgetriebe eines Kraftfahrzeugantriebsstranges angeordnet sein, oder das Achsgetriebe ist über eine weitere Zahnradstufe mit dieser achsparallelen Welle wirkverbunden. Das Getriebe G gemäß dem zweiten Ausführungsbeispiel eignet sich daher besonders für die Anwendung in einem Kraftfahrzeugantriebsstrangs, welcher quer zur Fahrtrichtung des Kraftfahrzeugs ausgerichtet ist. Ausgehend von der Schnittstelle GW1-A der Antriebswelle GW1 sind die drei Planetenradsätze nun in folgender axialer Reihenfolge hintereinander angeordnet: dritter Planetenradsatz P3, zweiter Planetenradsatz P2, ersten Planetenradsatz P1. Der dritte Planetenradsatz P3 weist demnach den kürzesten axialen Abstand zur Schnittstelle GW1-A der Antriebswelle GW1 auf. Die Schnittstelle GW2-A der Abtriebswelle GW2 ist axial zwischen der Schnittstelle GW1-A der Antriebswelle GW1 und dem dritten Planetenradsatz P3 angeordnet. Das vierte und fünfte Schaltelement 15, 16 sind axial zwischen der Schnittstelle GW1-A und der Schnittstelle GW2-A angeordnet.

Fig. 3 zeigt schematisch ein Getriebe G gemäß einem dritten Ausführungsbeispiel der Erfindung, welches im Wesentlichen dem in Fig. 1 dargestellten ersten Ausführungsbeispiel entspricht. Der erste Planetenradsatz P1 ist nun radial innerhalb des zweiten Planetenradsatzes P2 angeordnet. Das Sonnenrad E12 des zweiten Planetenradsatzes P2 ist dabei am Außendurchmesser des Hohlrades E31 des ersten Planetenradsatzes P1 angeordnet. Dadurch ist ein besonders kompakter Aufbau des Getriebes G möglich. Dabei führt die Verbindung zwischen dem Hohlrad E32 des zweiten Planetenradsatz P2 und der Abtriebswelle GW2 radial außen um den dritten Planetenradsatzes P3 herum. Diese Verbindung umgreift somit den dritten Planetenradsatz P3 radial außen. Die Verbindung zwischen dem dritten Element E33 des dritten Planetenradsatzes P3 und dem dritten Schaltelement 05 verläuft dabei axial durch den zweiten Planetenradsatz P2 hindurch.

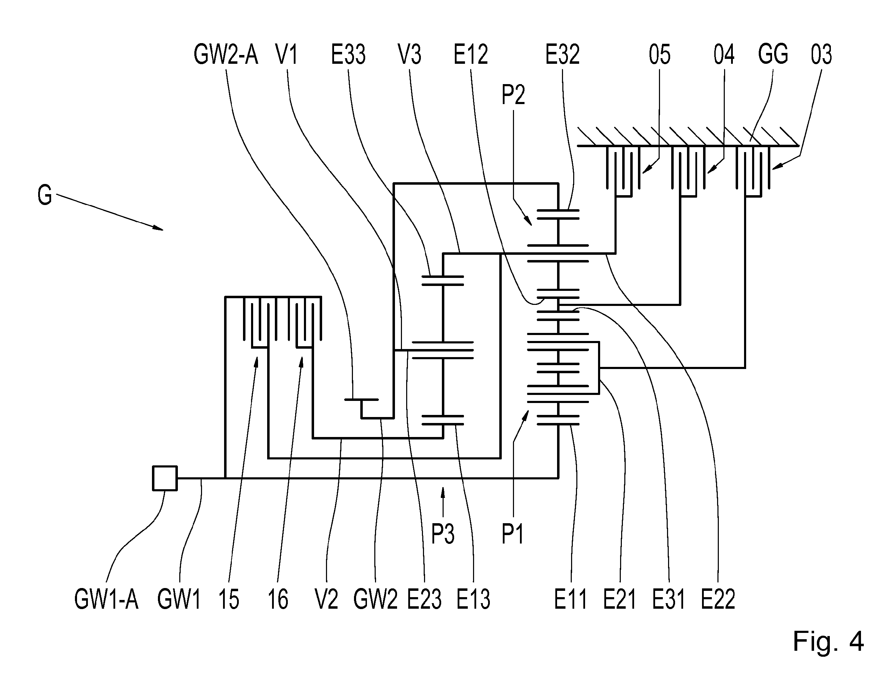

Fig. 4 zeigt schematisch ein Getriebe G gemäß einem vierten Ausführungsbeispiel der Erfindung, welches im Wesentlichen dem in Fig. 2 dargestellten zweiten Ausführungsbeispiel entspricht. Der erste Planetenradsatz P1 ist nun auch hier radial innerhalb des zweiten Planetenradsatzes P2 angeordnet. Das Sonnenrad E12 des zweiten Planetenradsatzes P2 ist dabei am Außendurchmesser des Hohlrades E31 des ersten Planetenradsatzes P1 angeordnet.

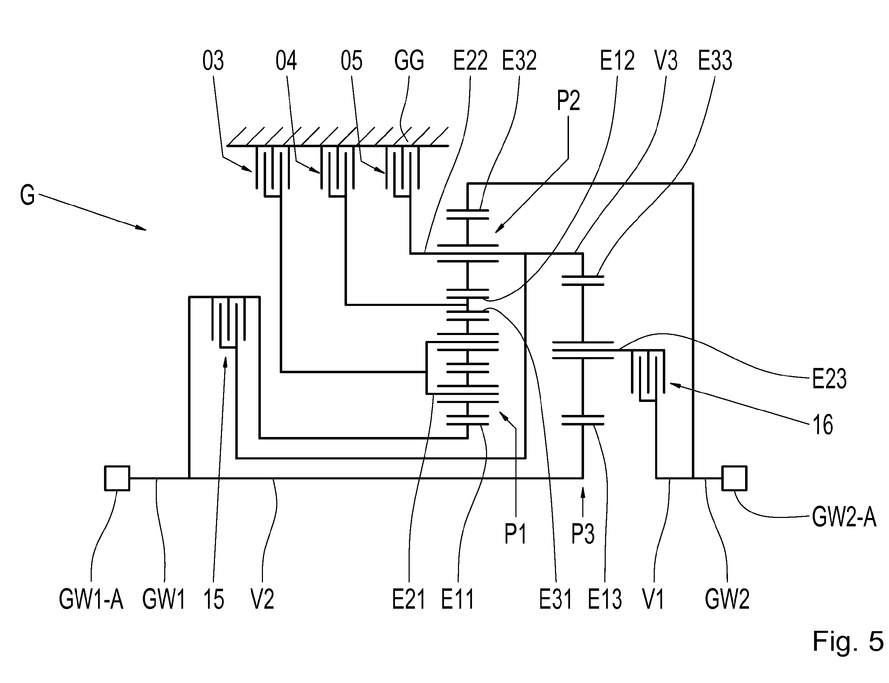

Fig. 5 zeigt schematisch ein Getriebe G gemäß einem fünften Ausführungsbeispiel der Erfindung, welches im Wesentlichen dem in Fig. 3 dargestellten dritten Ausführungsbeispiel entspricht. Das fünfte Schaltelement 16 ist nun nicht mehr in der Wirkverbindung zwischen der Antriebswelle GW1 und dem ersten Element E13 des dritten Planetenradsatzes P3 angeordnet. Stattdessen ist das fünfte Schaltelement 16 nun in der Wirkverbindung zwischen dem zweiten Element E23 des dritten Planetenradsatzes P3 und der Abtriebswelle GW2 angeordnet. Das fünfte Schaltelement 16 ist demnach in der ersten Koppelung V1 angeordnet. Demnach sind die zweite Koppelung V2 und die dritte Koppelung V3 als ständige Verbindungen auszubilden.

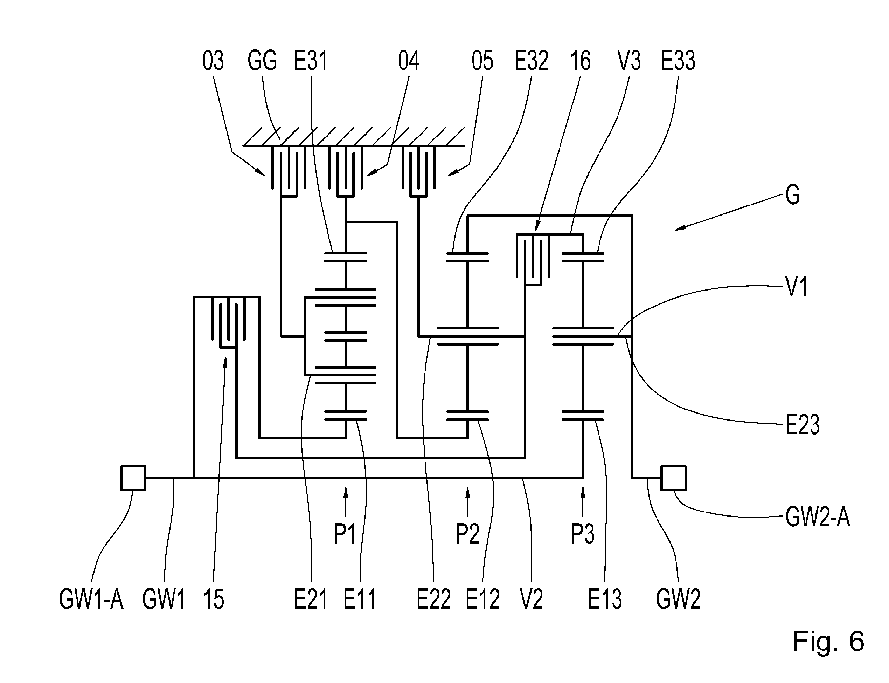

Fig. 6 zeigt schematisch ein Getriebe G gemäß einem sechsten Ausführungsbeispiel der Erfindung, welches im Wesentlichen dem in Fig. 1 dargestellten ersten Ausführungsbeispiel entspricht. Das fünfte Schaltelement 16 ist nun nicht mehr in der Wirkverbindung zwischen der Antriebswelle GW1 und dem ersten Element E13 des dritten Planetenradsatzes P3 angeordnet. Stattdessen ist das fünfte Schaltelement 16 nun in der Wirkverbindung zwischen dem Steg E22 des zweiten Planetenradsatzes P2 und dem dritten Element E33 des dritten Planetenradsatzes P3 angeordnet. Das fünfte Schaltelement 16 ist demnach in der dritten Kopplung V3 angeordnet. Dementsprechend sind die erste Koppelung V1 und die zweite Koppelung V2 als ständige Verbindungen auszubilden. In dieser Ausführungsform ist das fünfte Schaltelement 16 axial zwischen dem zweiten und dritten Planetenradsatz P2, P3 angeordnet, und das vierte Schaltelement 15 ist weiterhin axial neben dem ersten Planetenradsatz P1 angeordnet.

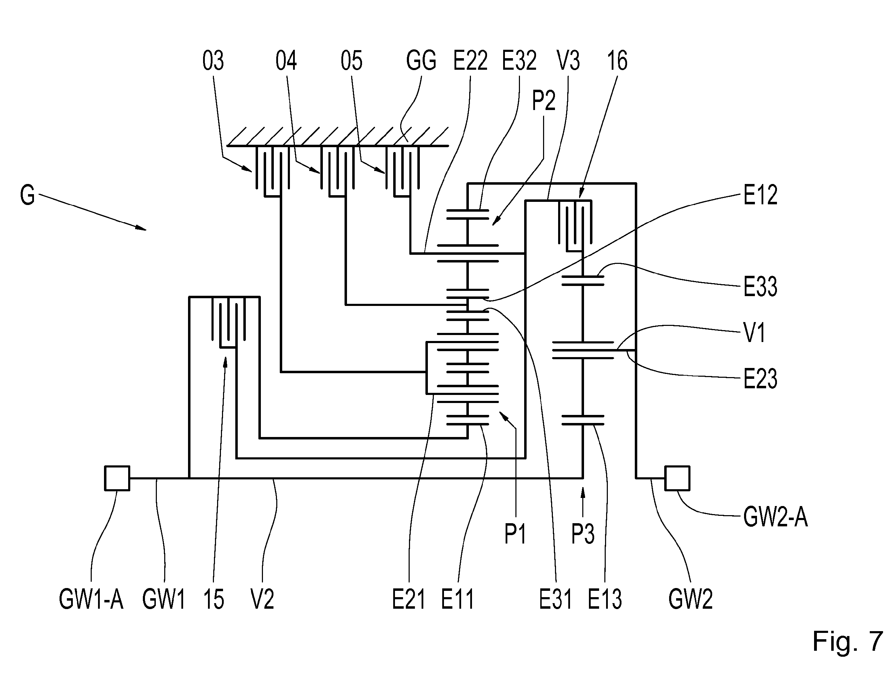

Fig. 7 zeigt schematisch ein Getriebe G gemäß einem siebenten Ausführungsbeispiel der Erfindung, welches im Wesentlichen dem in Fig. 3 dargestellten dritten Ausführungsbeispiel entspricht. In gleicher Weise wie im sechsten Ausführungsbeispiel ist das fünfte Schaltelement 16 dabei in der dritten Koppelung V3 angeordnet. Das fünfte Schaltelement 16 ist dabei radial außerhalb des dritten Planetenradsatzes P3 angeordnet.

In den vorangegangenen Absätzen wurde die Modifikation der Lage des fünften Schaltelementes 16 beispielhaft an dem in Fig. 3 dargestellten dritten Ausführungsbeispiel, bzw. dem in Fig. 1 dargestellten ersten Ausführungsbeispiel dargelegt. Eine derartige Modifikation der Lage des fünften Schaltelementes 16 in den drei Koppelungen V1, V2, V3 ist in jedem der Ausführungsbeispiele anwendbar. Dabei sind jeweils zwei der Koppelungen V1, V2, V3 als ständige Verbindungen auszubilden und die verbleibende der drei Koppelungen V1, V2, V3 als schaltbare Verbindung. Das fünfte Schaltelement 16 dient dabei als Mittel zur Herstellung der schaltbaren Verbindung.

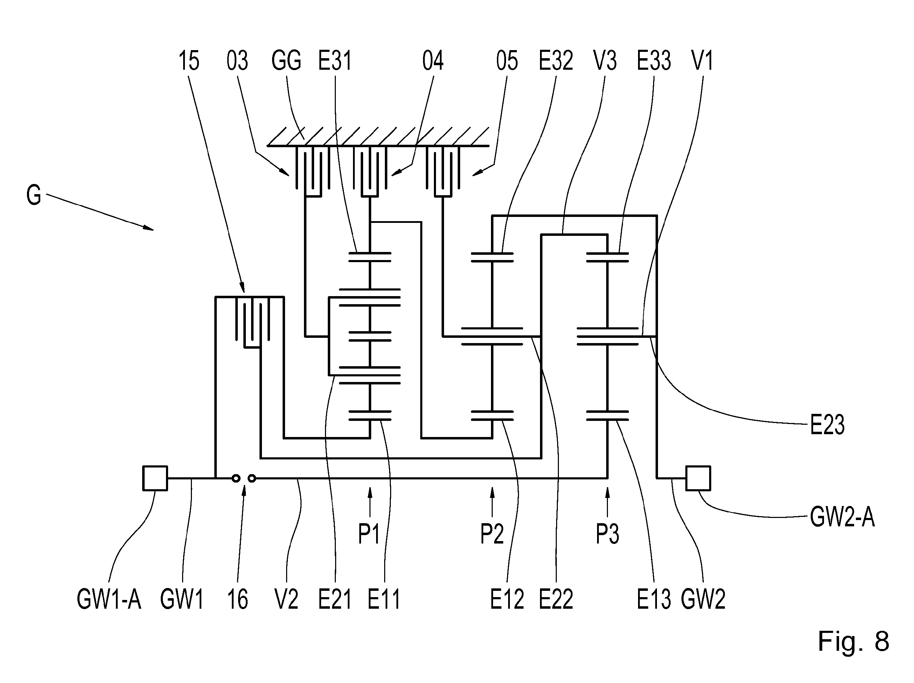

Fig. 8 zeigt schematisch ein Getriebe G gemäß einem achten Ausführungsbeispiel der Erfindung, welches im Wesentlichen dem in Fig. 1 dargestellten ersten Ausführungsbeispiel entspricht. Das fünfte Schaltelement 16 ist in der zweiten Koppelung V2 angeordnet und als ein formschlüssiges Schaltelement ausgebildet. Das fünfte Schaltelement 16 ist dabei radial innerhalb des vierten Schaltelements 15 angeordnet.

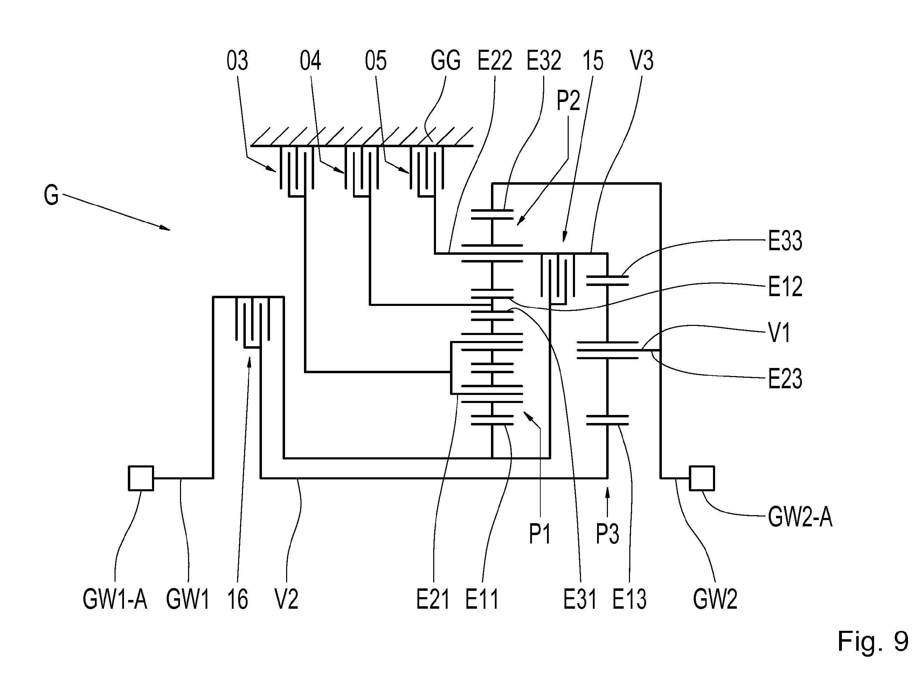

Fig. 9 zeigt schematisch ein Getriebe G gemäß einem neunten Ausführungsbeispiel der Erfindung, welches im Wesentlichen dem in Fig. 3 dargestellten dritten Ausführungsbeispiel entspricht. Das vierte Schaltelement 15 ist dabei axial zwischen dem zweiten und dritten Planetenradsatz P2, P3 angeordnet. Das fünfte Schaltelement 16 ist axial neben den Planetenradsätzen P1, P2, P3 angeordnet. Dadurch ist radial innerhalb der Antriebswelle GW1 nur eine Welle zu führen, nämlich die zweite Koppelung V2. Eine solche Anordnung begünstigt einen radial kompakten Aufbau des Getriebes G.

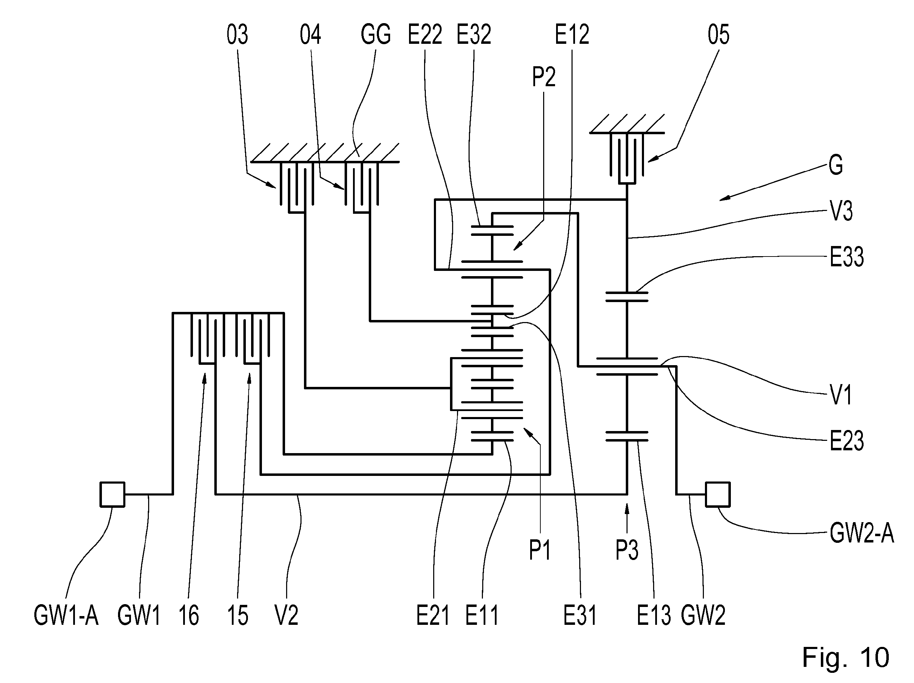

Fig. 10 zeigt schematisch ein Getriebe G gemäß einem zehnten Ausführungsbeispiel der Erfindung, welches im Wesentlichen dem in Fig. 3 dargestellten dritten Ausführungsbeispiel entspricht. Das fünfte Schaltelement 16 ist in der zweiten Koppelung V2 angeordnet. Die Verbindung zwischen dem Hohlrad des zweiten Planetenradsatz P2 und der Abtriebswelle GW2 führt axial durch den dritten Planetenradsatz P3 hindurch. Die Verbindung zwischen dem Steg E22 des zweiten Planetenradsatzes P2 und dem dritten Element E33 des dritten Planetenradsatzes P3 führt radial außen um den zweiten Planetenradsatz P2 herum. Das dritte Schaltelement 05 ist radial außerhalb des dritten Planetenradsatzes P3 angeordnet.

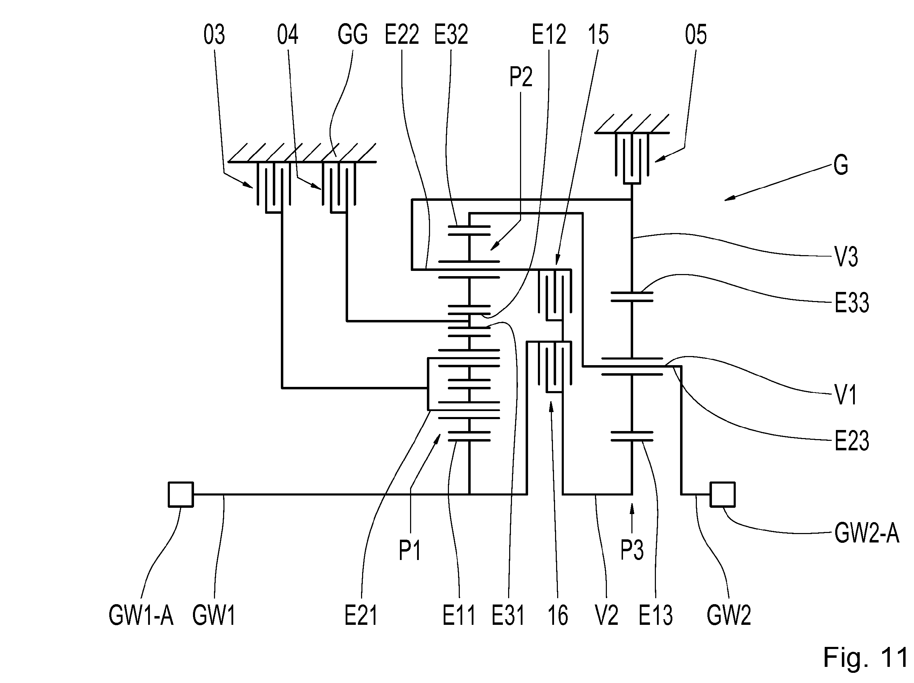

Fig. 11 zeigt schematisch ein Getriebe G gemäß einem elften Ausführungsbeispiel der Erfindung, welches im Wesentlichen dem in Fig. 10 dargestellten zehnten Ausführungsbeispiel entspricht. Die Schaltelemente 15, 16 sind dabei axial zwischen den radial ineinander geschachtelten Planetenradsätzen P1, P2 und dem dritten Planetenradsatz P3 angeordnet.

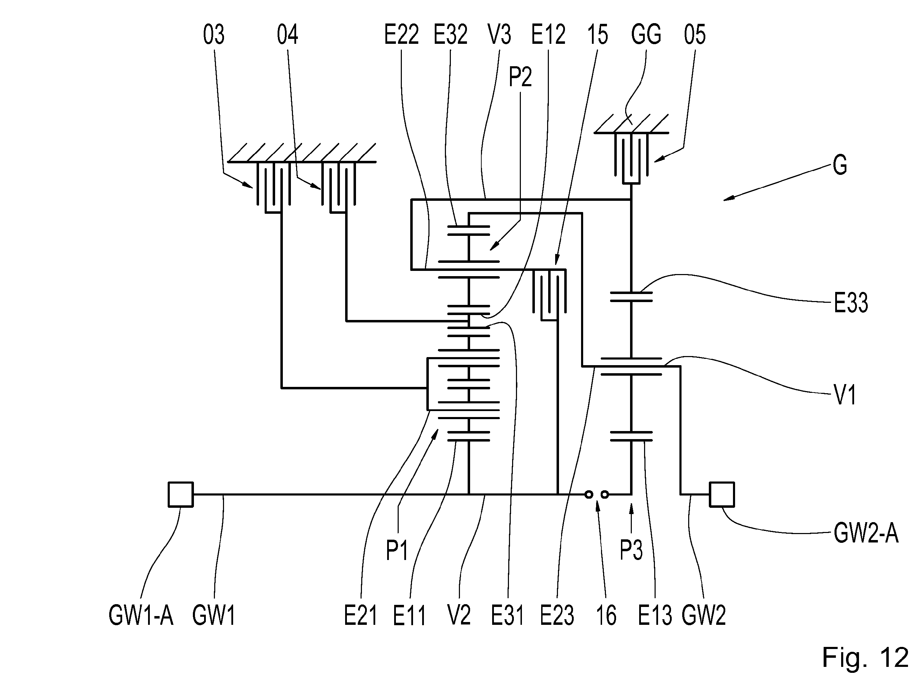

Fig. 12 zeigt schematisch ein Getriebe G gemäß einem zwölften Ausführungsbeispiel der Erfindung, welches im Wesentlichen dem in Fig. 11 dargestellten elften Ausführungsbeispiel entspricht. Das fünfte Schaltelement 16 ist dabei als formschlüssiges Schaltelement ausgebildet.

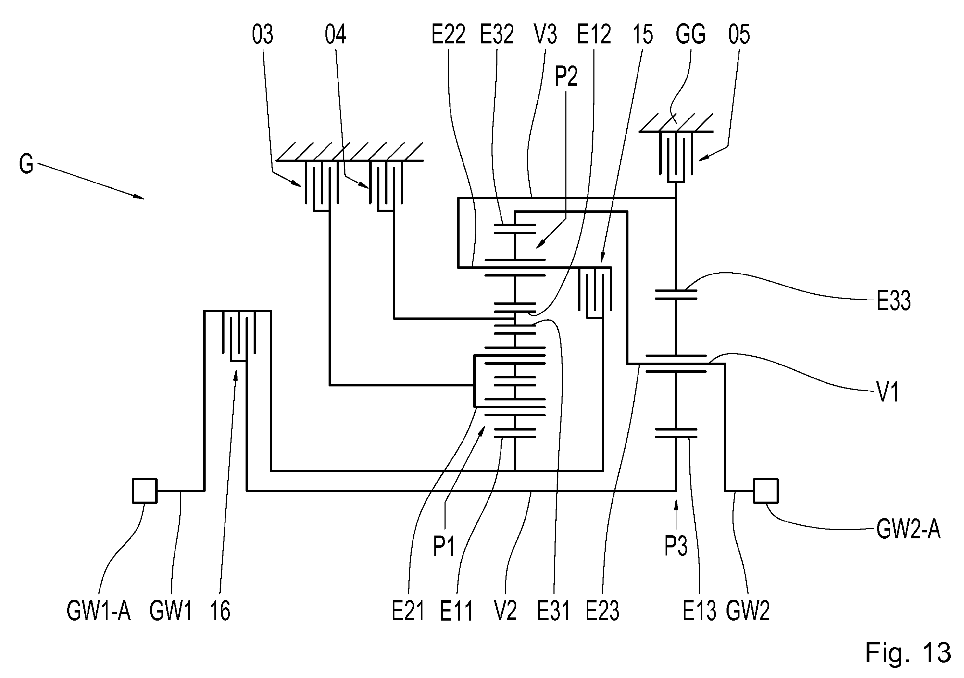

Fig. 13 zeigt schematisch ein Getriebe G gemäß einem dreizehnten Ausführungsbeispiel der Erfindung, welches im Wesentlichen dem in Fig. 10 dargestellten zehnten Ausführungsbeispiel entspricht. Das vierte Schaltelement 15 ist dabei axial zwischen dem zweiten und dritten Planetenradsatz P2, P3 angeordnet. Das fünfte Schaltelement 16 ist axial neben den Planetenradsätzen P1, P2, P3 angeordnet. Dadurch ist radial innerhalb der Antriebswelle GW1 nur eine Welle zu führen, nämlich die zweite Koppelung V2. Eine solche Anordnung begünstigt einen radial kompakten Aufbau des Getriebes G.

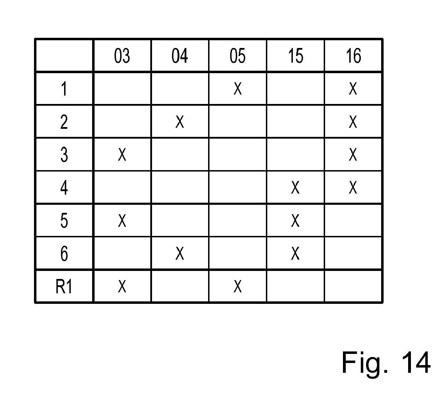

Fig. 14 zeigt ein Schaltschema, welches für sämtliche Ausführungsbeispiele des Getriebes G anwendbar ist. In den Zeilen des Schaltschemas sind sechs Vorwärtsgänge 1 bis 6 sowie ein Rückwärtsgang R1 dargestellt. In den Spalten des Schaltschemas ist durch ein X gekennzeichnet, welche der Schaltelemente 03, 04, 05, 15, 16 in welchem Vorwärtsgang 1 bis 6 beziehungsweise Rückwärtsgang R1 geschlossen sind.

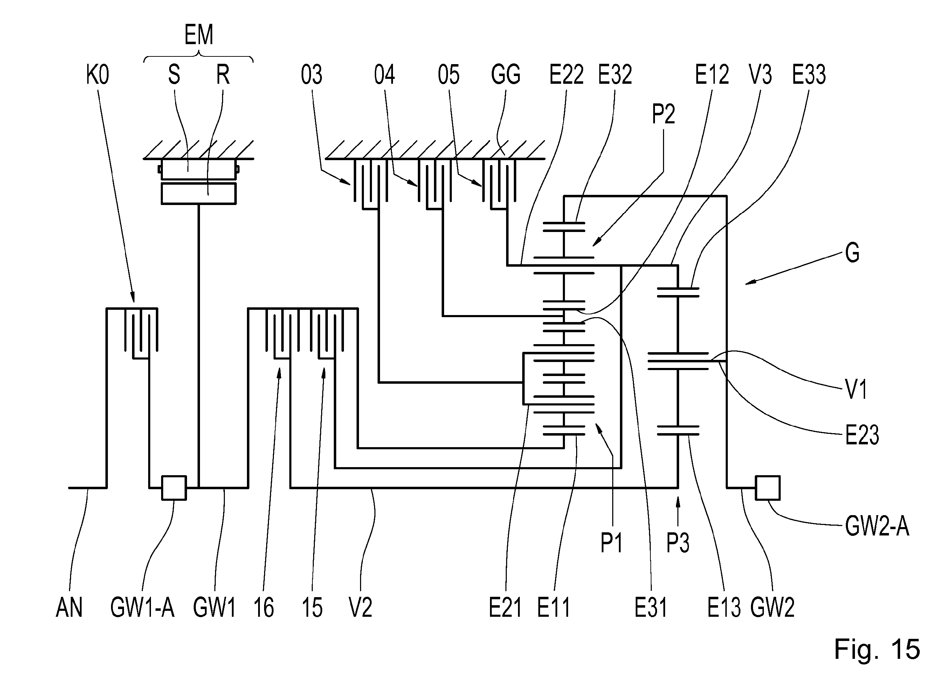

Fig. 15 zeigt schematisch ein Getriebe G gemäß einem vierzehnten Ausführungsbeispiel der Erfindung, welches im Wesentlichen dem in Fig. 3 dargestellten dritten Ausführungsbeispiel entspricht. Das Getriebe G wurde um eine elektrische Maschine EM, eine Trennkupplung K0 und eine Anschlusswelle AN ergänzt. Die elektrische Maschine EM umfasst einen drehfesten Stator S und einen drehbaren Rotor R, wobei der Rotor R mit der Antriebswelle GW1 ständig verbunden ist. Die Anschlusswelle AN dient als Schnittstelle zu einer getriebeexternen Antriebseinheit, beispielsweise einer Verbrennungskraftmaschine. Die Trennkupplung KO befindet sich in der Wirkverbindung zwischen der Anschlusswelle AN und der Antriebswelle GW1. Ist die Trennkupplung KO geöffnet, so kann die elektrische Maschine EM die Antriebswelle GW1 antreiben, ohne die Anschlusswelle AN mitzuschleppen. Die Trennkupplung KO ist dabei vorzugsweise radial innerhalb der elektrischen Maschine EM angeordnet. Die Trennkupplung KO ist beispielhaft als ein kraftschlüssiges Schaltelement ausgebildet. Dies ist lediglich beispielhaft anzusehen. Die Trennkupplung KO könnte auch als ein formschlüssiges Schaltelement ausgebildet sein. Zwischen dem Rotor R und der Antriebswelle GW1 könnte auch ein Übersetzungsgetriebe angeordnet sein, welches vorzugsweise dazu eingerichtet ist, die Drehzahl des Rotors R im Verhältnis zur Drehzahl der Antriebswelle GW1 zu erhöhen. Dies ist aus Gründen der Übersichtlichkeit nicht in den Figuren dargestellt.

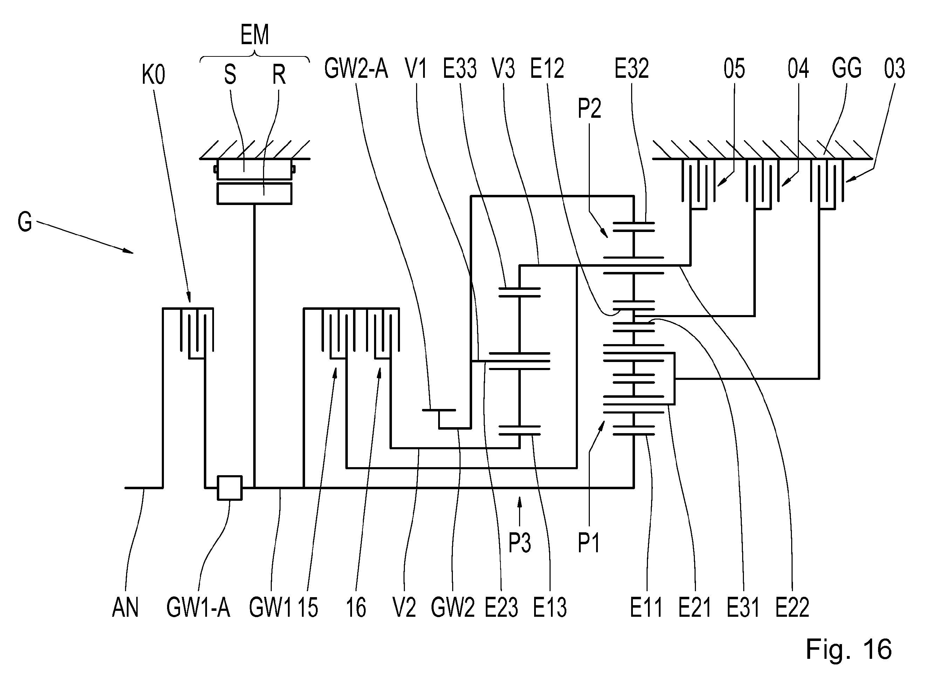

Fig. 16 zeigt schematisch ein Getriebe G gemäß einem vierzehnten Ausführungsbeispiel der Erfindung, welches im Wesentlichen dem in Fig. 4 dargestellten vierten Ausführungsbeispiel entspricht. Das Getriebe G wurde ebenso durch die elektrische Maschine EM mit ihrem drehfesten Stator S und ihrem drehbaren Rotor R, die Trennkupplung KO und die Anschlusswelle AN ergänzt. Die Ausführungen zu Fig. 15 sind auch auf das Ausführungsbeispiel gemäß Fig. 16 entsprechend anzuwenden.

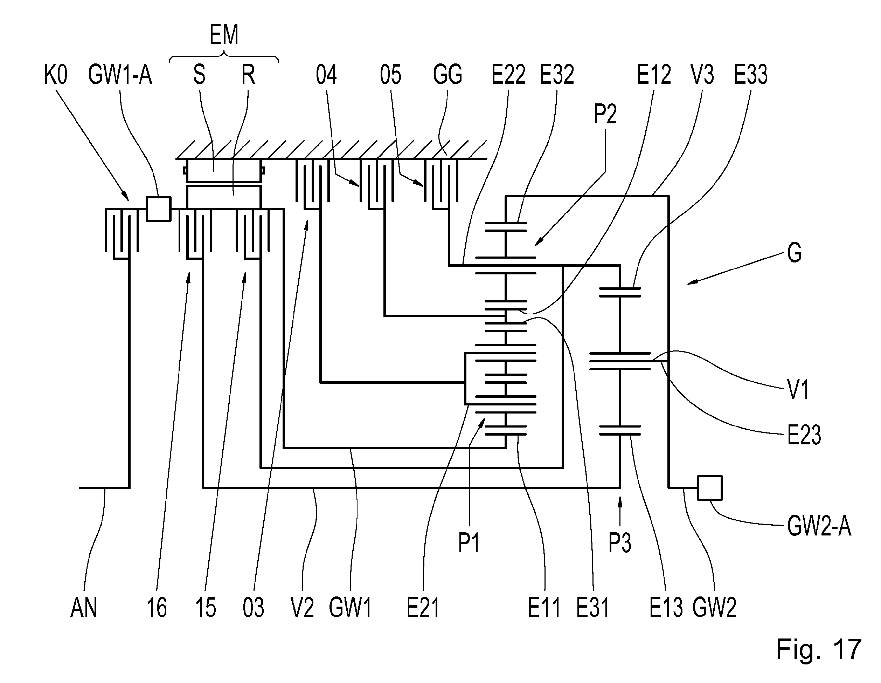

Fig. 17 zeigt schematisch ein Getriebe G gemäß einem sechszehnten Ausführungsbeispiel der Erfindung, welches im Wesentlichen dem in Fig. 15 dargestellten vierzehnten Ausführungsbeispiel entspricht. Die in kraftschlüssiger Bauweise ausgebildeten Schaltelemente 15, 16 sind nun radial innerhalb des Rotors R angeordnet, wobei deren Außenlamellenträger mit dem Rotor R unmittelbar verbunden sind.

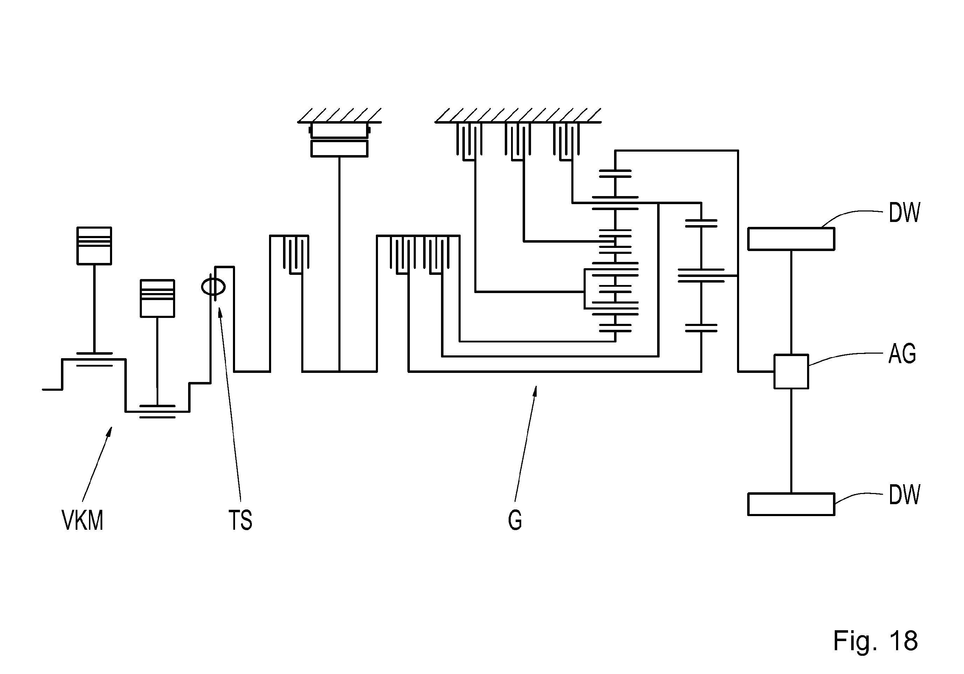

Fig. 18 zeigt schematisch einen Antriebsstrang eines Kraftfahrzeugs. Eine Verbrennungskraftmaschine VKM ist über einen Torsionsschwingungsdämpfer TS mit der Anschlusswelle AN des Getriebes G verbunden. Das in Fig. 18 dargestellte Getriebe G entspricht dem in Fig. 15 dargestellten vierzehnten Ausführungsbeispiel der Erfindung. Dies ist lediglich beispielhaft anzusehen. Die Verbrennungskraftmaschine VKM könnte über den Torsionsschwingungsdämpfer TS auch direkt mit der Antriebswelle GW1 des Getriebes G verbunden sein. Das Getriebe G könnte auch ohne elektrische Maschine EM ausgebildet sein. Der Antriebsstrang könnte mit jedem der gegenständlichen Ausführungsbeispiele, mit oder ohne elektrische Maschine EM, ausgeführt sein. Der Antriebsstrang könnte auch einen hydrodynamischen Drehmomentwandler enthalten, welcher beispielsweise zwischen der Trennkupplung KO und der Antriebswelle GW1 angeordnet ist. Ein solcher Drehmomentwandler kann auch eine Überbrückungskupplung umfassen. Der Fachmann wird Anordnung und räumliche Lage der einzelnen Komponenten des Antriebsstranges je nach den äußeren Randbedingungen frei konfigurieren. Die Abtriebswelle GW2 ist mit einem Achsgetriebe AG verbunden, über welches die an der Abtriebswelle GW2 anliegende Leistung auf Antriebsräder DW des Kraftfahrzeugs verteilt wird.

### Bezugszeichen

- G: Getriebe
- GG: Drehfestes Bauelement
- P1: Erster Planetenradsatz
- E11: Sonnenrad des ersten Planetenradsatzes
- E21: Steg des ersten Planetenradsatzes
- E31: Hohlrad des ersten Planetenradsatzes
- P2: Zweiter Planetenradsatz
- E12: Sonnenrad des zweiten Planetenradsatzes
- E22: Steg des zweiten Planetenradsatzes
- E32: Hohlrad des zweiten Planetenradsatzes
- P3: Dritter Planetenradsatz
- E13: Erstes Element des dritten Planetenradsatzes
- E23: Zweites Element des dritten Planetenradsatzes
- E33: Drittes Element des dritten Planetenradsatzes
- 03: Erstes Schaltelement
- 04: Zweites Schaltelement
- 05: Drittes Schaltelement
- 15: Viertes Schaltelement
- 16: Fünftes Schaltelement
- V1: Erste Koppelung
- V2: Zweite Koppelung
- V3: Dritte Koppelung
- 1 bis 6: Vorwärtsgänge
- R1: Rückwärtsgang
- GW1: Antriebswelle
- GW2: Abtriebswelle
- GW1-A: Schnittstelle der Antriebswelle
- GW2-A: Schnittstelle der Abtriebswelle
- EM: Elektrische Maschine
- S: Stator
- R: Rotor
- K0: Trennkupplung
- AN: Anschlusswelle
- VKM: Verbrennungskraftmaschine
- DW: Räder

## Patentansprüche

1. Getriebe (G) für ein Kraftfahrzeug, wobei das Getriebe (G) eine Antriebswelle (GW1), eine Abtriebswelle (GW2), einen ersten, zweiten und dritten Planetenradsatz (P1, P2, P3) sowie zumindest ein erstes, zweites, drittes, viertes und fünftes Schaltelement (03, 04, 05, 15, 16) aufweist,
- wobei der dritte Planetenradsatz (P3) ein erstes, ein zweites und ein drittes Element (E13, E23, E33) aufweist, wobei das erste Element (E13) durch ein Sonnenrad des dritten Planetenradsatzes (P3) gebildet ist, wobei das zweite Element (E23) im Falle eines Minus-Radsatzes durch einen Steg und im Falle eines Plus-Radsatzes durch ein Hohlrad des dritten Planetenradsatzes (P3) gebildet ist, wobei das dritte Element (E33) im Falle eines Minus-Radsatzes durch das Hohlrad und im Falle eines Plus-Radsatzes durch den Steg des dritten Planetenradsatzes (P3) gebildet ist,
- wobei die Antriebswelle (GW1) mit einem Sonnenrad (E11) des als Plus-Radsatz ausgebildeten ersten Planetenradsatzes (P1) ständig verbunden ist,
- wobei die Abtriebswelle (GW2) mit einem Hohlrad (E32) des als Minus-Radsatz ausgebildeten zweiten Planetenradsatzes (P2) ständig verbunden ist,
- wobei ein Hohlrad (E31) des ersten Planetenradsatzes (P1) mit einem Sonnenrad (E12) des zweiten Planetenradsatzes (P2) ständig verbunden ist,
- wobei durch Schließen des ersten Schaltelements (03) ein Steg (E21) des ersten Planetenradsatzes (P1) drehfest festsetzbar ist,
- wobei durch Schließen des zweiten Schaltelements (04) das Hohlrad (E31) des ersten Planetenradsatzes (P1) drehfest festsetzbar ist,
- wobei durch Schließen des dritten Schaltelements (05) ein Steg (E22) des zweiten Planetenradsatzes (P2) drehfest festsetzbar ist,
- wobei durch Schließen des vierten Schaltelements (15) eine drehmomentführende Verbindung zwischen der Antriebswelle (GW1) und dem Steg (E22) des zweiten Planetenradsatzes (P2) herstellbar ist, und
- wobei das Getriebe (G) eine erste, zweite und dritte Koppelung (V1, V2, V3) aufweist, wobei die erste Koppelung (V1) zwischen der Abtriebswelle (GW2) und dem zweiten Element (E23) besteht, wobei die zweite Koppelung (V2) zwischen der Antriebswelle (GW1) und dem ersten Element (E13) besteht, wobei die dritte Koppelung (V3) zwischen dem Steg (E22) des zweiten Planetenradsatzes (P2) und dem dritten Element (E33) besteht, wobei zwei der drei Koppelungen (V1, V2, V3) als ständige Verbindungen ausgebildet sind und die verbleibende der drei Koppelungen (V1, V2, V3) als eine mittels dem fünften Schaltelement (16) schaltbare Verbindung ausgebildet ist.

2. Getriebe (G) nach Anspruch 1, **dadurch gekennzeichnet, dass** durch selektives paarweises Schließen der fünf Schaltelemente (03, 04, 05, 15, 16) sechs Vorwärtsgänge (1 bis 6) und ein Rückwärtsgang (R1) zwischen der Antriebswelle (GW1) und der Abtriebswelle (GW2) ausbildbar sind, wobei sich
- der erste Vorwärtsgang (1) durch Schließen des fünften Schaltelements (16) und des dritten Schaltelements (05),
- der zweite Vorwärtsgang (2) durch Schließen des fünften Schaltelements (16) und des zweiten Schaltelements (04),
- der dritte Vorwärtsgang (3) durch Schließen des fünften Schaltelements (16) und des ersten Schaltelements (03),
- der vierte Vorwärtsgang (4) durch Schließen des fünften Schaltelements (16) und des vierten Schaltelements (15),
- der fünfte Vorwärtsgang (5) durch Schließen des ersten Schaltelements (03) und des vierten Schaltelements (15),
- der sechste Vorwärtsgang (6) durch Schließen des zweiten Schaltelements (04) und des vierten Schaltelements (15), und
- der Rückwärtsgang (R1) sich durch Schließen des ersten Schaltelements (03) und des dritten Schaltelements (05) ergibt.

3. Getriebe (G) nach Anspruch 1 oder Anspruch 2, **dadurch gekennzeichnet, dass** der erste Planetenradsatz (P1) radial innerhalb des zweiten Planetenradsatzes (P2) angeordnet ist.

4. Getriebe (G) nach einem der vorangehenden Ansprüche, **dadurch gekennzeichnet, dass** Schnittstellen (GW1-A, GW2-A) der Antriebswelle (GW1) und der Abtriebswelle (GW2) koaxial zueinander und an gegenüberliegenden axialen Enden des Getriebes (G) angeordnet sind, wobei von den drei Planetenradsätzen (P1, P2, P3) der dritte Planetenradsatz (P3) den größten axialen Abstand zur Schnittstelle (GW1-A) der Antriebswelle (GW1) aufweist.

5. Getriebe (G) nach einem der Ansprüche 1 bis 3, **dadurch gekennzeichnet, dass** Schnittstellen (GW1-A, GW2-A) der Antriebswelle (GW1) und der Abtriebswelle (GW2) koaxial zueinander angeordnet sind, wobei von den drei Planetenradsätzen (P1, P2, P3) der dritte Planetenradsatz (P3) den kürzesten axialen Abstand zur Schnittstelle (GW1-A) der Antriebswelle (GW1) aufweist.

6. Getriebe (G) nach einem der vorangehenden Ansprüche, **dadurch gekennzeichnet, dass** das dritte Schaltelement (05) als ein formschlüssiges Schaltelement oder als ein kraftschlüssiges Reibschaltelement, dessen Lamellen ausschließlich belaglose Reibflächen aufweisen, ausgebildet ist.

7. Getriebe (G) nach einem der vorangehenden Ansprüche, **dadurch gekennzeichnet, dass** das fünfte Schaltelement (16) als ein formschlüssiges Schaltelement oder als ein kraftschlüssiges Reibschaltelement, dessen Lamellen ausschließlich belaglose Reibflächen aufweisen, ausgebildet ist.

8. Getriebe (G) nach zumindest einem der Ansprüche 6 und 7, **dadurch gekennzeichnet, dass** das erste, zweite und vierte Schaltelement (03, 04, 15) je als ein kraftschlüssiges Schaltelement ausgebildet sind.

9. Getriebe (G) nach einem der vorangehenden Ansprüche, **dadurch gekennzeichnet, dass** die Verbindung zwischen dem Hohlrad (E32) des zweiten Planetenradsatzes (P2) und der Abtriebswelle (GW2) den dritten Planetenradsatz (P3) radial umgreift, wobei die Verbindung zwischen dem dritten Element (E33) des dritten Planetenradsatzes (P3) und dem dritten Schaltelement (05) den zweiten Planetenradsatz (P2) axial durchgreift.

10. Getriebe (G) nach einem der Ansprüche 1 bis 8, **dadurch gekennzeichnet, dass** das fünfte Schaltelement (16) in der zweiten oder in der dritten Koppelung (V2, V3) angeordnet ist, wobei die Verbindung zwischen dem Hohlrad (E32) des zweiten Planetenradsatzes (P2) und der Abtriebswelle (GW2) den als Minus-Radsatz ausgebildeten dritten Planetenradsatz (P3) axial durchgreift.

11. Getriebe (G) nach Anspruch 10, **dadurch gekennzeichnet, dass** das dritte Schaltelement (05) radial außerhalb des dritten Planetenradsatzes (P3) angeordnet ist.

12. Getriebe (G) nach einem der Ansprüche 1 bis 11, **dadurch gekennzeichnet, dass** das erste und zweite Schaltelement (03, 04) einen größeren Wirkdurchmesser als das vierte und fünfte Schaltelement (15, 16) aufweisen.

13. Getriebe (G) nach einem der Ansprüche 1 bis 12, **dadurch gekennzeichnet, dass** das vierte und fünfte Schaltelement (15, 16) entweder axial neben den Planetenradsätzen (P1, P2, P3) oder axial zwischen dem zweiten und dritten Planetenradsatz (P2, P3) angeordnet sind.

14. Getriebe (G) nach einem der vorangehenden Ansprüche, **dadurch gekennzeichnet, dass** das vierte Schaltelement (15) radial außerhalb des fünften Schaltelements (16) angeordnet ist.

15. Getriebe (G) nach einem der Ansprüche 1 bis 12, **dadurch gekennzeichnet, dass** das vierte Schaltelement (15) axial zwischen dem zweiten und dritten Planetenradsatz (P2, P3) angeordnet ist, wobei das fünfte Schaltelement (16) axial neben den Planetenradsätzen angeordnet ist.

16. Getriebe (G) nach einem der vorangehenden Ansprüche, **dadurch gekennzeichnet, dass** das Getriebe (G) eine elektrische Maschine (EM) mit einem drehfesten Stator (S) und einem drehbaren Rotor (R) aufweist, wobei der Rotor (R) mit der Antriebswelle (GW1) in ständiger Wirkverbindung steht.

17. Getriebe (G) nach Anspruch 16 unter Rückbezug auf einen der Ansprüche 1 bis 12, **dadurch gekennzeichnet, dass** das vierte und/oder das fünfte Schaltelement (15, 16) zumindest abschnittsweise radial innerhalb der elektrischen Maschine (EM) angeordnet sind.

18. Getriebe (G) nach Anspruch 17, **dadurch gekennzeichnet, dass** das vierte und/oder das fünfte Schaltelement (15, 16) als je eine Lamellenkupplung ausgebildet ist, wobei ein Außenlamellenträger der Lamellenkupplung, bzw. Lamellenkupplungen mit dem Rotor (R) ständig verbunden sind.

19. Antriebsstrang für ein Kraftfahrzeug, wobei der Antriebsstrang eine Verbrennungskraftmaschine (VKM), ein Getriebe (G) nach einem der Ansprüche 1 bis 18 sowie ein mit Rädern (DW) des Kraftfahrzeugs wirkverbundenes Achsgetriebe (AG) aufweist, wobei die Antriebswelle (GW1) oder die Anschlusswelle (AN) des Getriebes (G) über einen Torsionsschwingungsdämpfer (TS) mit der Verbrennungskraftmaschine (VKM) drehelastisch verbunden ist und die Abtriebswelle (GW2) des Getriebes (G) mit dem Achsgetriebe (AG) antriebswirkverbunden ist.
